# DEMANDE DE BREVET EUROPEEN

(11) **EP 1 661 779 A1**
(43) Date de publication de la demande: **31.05.2006**
(21) Numéro de dépôt: 04028173.5
(22) Date de dépôt: 26.11.2004
(51) Int. Cl.: B60S 3/04

(54) **Installation de lavage pour véhicule**

(71) Demandeur: Financière Clairac, 75116 Paris (FR)
(72) Inventeur: Sarbach, Jean-Charles, 67700 Saverne (FR)
(74) Mandataire: Merckling, Norbert

(57) **Abrégé**

L'invention se rapporte à une installation de lavage comportant :
- des moyens d'alimentation à haute pression en liquide de lavage ;
- un tuyau (1) dont une première extrémité (2) est reliée au moyen d'alimentation, une seconde extrémité étant pourvue d'une buse de projection du liquide de lavage,
- un support soutenant le tuyau (1) et monté rotatif autour d'un axe de rotation (Z), sensiblement vertical, de manière à s'étendre au-dessus d'un espace de lavage,
- et ledit support comportant un bras tournant (4) s'étendant selon une direction radiale à partir de l'axe de rotation (Z), ledit bras (4) supportant au moins en partie le tuyau (1) et balayant une surface sensiblement horizontale lors de sa rotation.

Selon l'invention, le bras tournant (4) comporte des moyens modulant sa longueur, en fonction de sa position angulaire de balayage au-dessus de l'espace de lavage.

## Description

La présente invention se rapporte au domaine technique des centres de lavage de véhicules.

De tels centres de lavage sont pourvus de dispositifs de lavage à haute pression comportant des organes de sélection permettant à l'utilisateur de choisir un ou plusieurs programmes de lavage.

On connaît ainsi des installations de lavage comportant :
- des moyens d'alimentation à haute pression en liquide de lavage ;
- un tuyau dont une première extrémité est reliée au moyen d'alimentation, une seconde extrémité étant pourvue d'une buse de projection du liquide de lavage,
- un support soutenant le tuyau et monté rotatif autour d'un axe de rotation, sensiblement vertical, de manière à s'étendre au-dessus d'un espace de lavage,
- ledit support comportant un bras tournant s'étendant selon une direction radiale à partir de l'axe de rotation, ledit bras supportant au moins en partie le tuyau et balayant une surface sensiblement horizontale lors de sa rotation.

On connaît ainsi des centres de lavage comportant un bras tournant, lequel supporte un tuyau. Le bras tournant décrit à son extrémité un trajet circulaire autour et au-dessus d'une zone de lavage dans laquelle est disposé un véhicule. De telles installations présentent un certain nombre d'inconvénients. En effet, il convient de disposer d'une longueur de tuyau importante entre l'extrémité du bras tournant et l'extrémité du tuyau comportant par exemple une lance de lavage, afin d'assurer un accès à tous les endroits du véhicule susceptibles d'être lavés. L'accessibilité à toutes les parties d'un véhicule dépend fortement des dimensions dudit véhicule, et une installation de lavage doit de préférence être adaptée pour le lavage de tous les véhicules indépendamment de leurs dimensions.

Afin d'assurer une telle accessibilité on dispose en général d'une longueur excédentaire du tuyau qui entraîne des gênes pour l'utilisateur. Ces gênes sont liées à des accrochages fréquents du tuyau avec certaines surfaces saillantes du véhicule telles que les rétroviseurs, les pare-chocs, les essuie-glaces, antennes ou autres ainsi qu'à une surcharge de masse du tuyau haute pression que l'utilisateur doit manipuler.

Le but de la présente invention vise à s'affranchir des inconvénients précités ainsi qu'à réaliser une installation de lavage dont les coûts de fabrication ainsi que la fiabilité ne sont pas altérés .

Selon l'invention, le bras tournant comporte des moyens modulant sa longueur en fonction de sa position angulaire de balayage au-dessus de l'espace de lavage. Il est ainsi possible d'optimiser la position du tuyau lors du lavage d'un véhicule, et en particulier lorsque le manipulateur du tuyau tourne autour du véhicule. La masse de tuyau à manipuler s'en trouve réduite de même que les contraintes mécaniques exercées sur le bras tournant. Ceci affecte favorablement la durée de vie d'un certain nombre de pièces constitutives de l'installation de lavage et notamment des pièces supportant le tuyau. Ce dernier peut également présenter une longueur plus faible grâce à l'installation de lavage conforme à l'invention, ce qui est de nature à réduire le risque d'accrochage dudit tuyau par un véhicule entrant ou sortant de l'aire de lavage.

Selon un exemple de réalisation, le support comporte un mât vertical, centré au-dessus de l'espace de lavage, à partir duquel s'étend le bras tournant.

Selon un exemple de réalisation, le bras tournant est relié mécaniquement au mât vertical avec une extrémité axiale.

Le mât vertical est par exemple une pièce tubulaire constituant un conduit d'amenée du liquide de lavage et sur lequel est connectée la première extrémité du tuyau.

Selon un exemple de réalisation, le tuyau est relié de façon rigide à une extrémité extérieure du bras tournant, distante de l'axe de rotation vertical.

Selon un exemple de réalisation, l'installation de lavage comporte des moyens de guidage fixes, supportant le bras tournant lors de sa rotation autour de l'axe de rotation vertical.

Les moyens de guidage s'étendent de préférence dans un plan d'extension sensiblement horizontal et constituent au moins en partie les moyens modulant la longueur du bras tournant.

Selon un exemple de réalisation, les moyens de guidage comportent une glissière ou un rail.

Selon un exemple de réalisation, la glissière s'étend selon un trajet de forme oblongue, correspondant à une projection homothétique d'une périphérie sensiblement rectangulaire d'un véhicule.

Selon un exemple de réalisation, le bras tournant comporte un patin s'appuyant et se déplaçant sur la glissière.

Selon un autre exemple de réalisation conforme à l'invention, le bras tournant comporte un organe de roulement s'appuyant et se déplaçant sur la glissière.

Selon un exemple de réalisation, le bras tournant est un double parallélogramme déformable, présentant une articulation axiale voisine ou centrée sur l'axe de rotation vertical, une articulation médiane guidée en déplacement par les moyens de guidage fixes et une articulation extérieure associée à un organe de maintien ou de fixation du tuyau.

Selon un autre exemple de réalisation, le bras tournant est un bras du type télescopique.

La seconde extrémité du tuyau est par exemple associée à un organe de manipulation facilitant la préhension dudit tuyau par l'utilisateur.

D'autres caractéristiques avantageuses ressortiront également de la description détaillée figurant ci-après, donnée à titre d'exemple non limitatif, en référence aux dessins annexés, dans lesquels :
- la figure 1 est une représentation en perspective d'un exemple de réalisation d'une installation de lavage conforme à l'invention ;
- la figure 2 est un détail de la figure 1 ;
- la figure 3 est une représentation schématique des trajets de divers éléments de l'installation de lavage conforme à l'invention, lors de son utilisation.

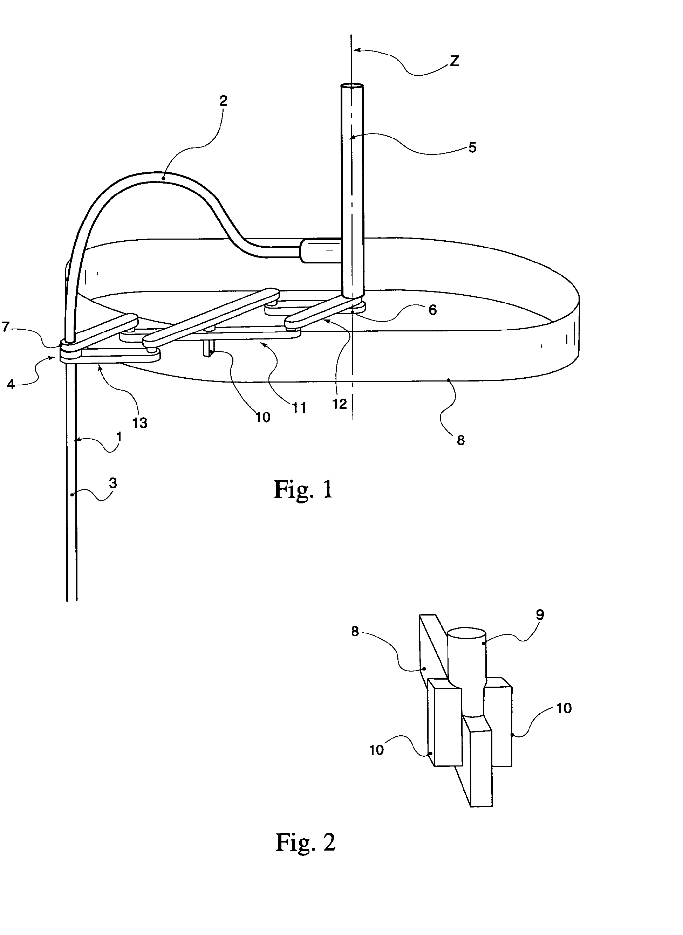

Un exemple de réalisation d'une installation de lavage conforme à l'invention est par exemple représenté en partie à la figure 1. L'installation de lavage comporte des moyens d'alimentation à haute pression en liquide de lavage, connus en tant que tels et non représentés. L'installation de lavage comporte un tuyau (1) dont une première extrémité (2) est reliée au moyen d'alimentation. Une seconde extrémité (3) est pourvue d'une buse de projection de liquide de lavage non représentée. La seconde extrémité est par exemple associée à un organe de manipulation (non représenté) facilitant la préhension du tuyau (1) par l'utilisateur.

L'installation de lavage comporte par ailleurs un support soutenant le tuyau (1) et monté rotatif autour d'un axe de rotation (Z) sensiblement vertical. Le support s'étend au-dessus d'un espace de lavage. L'utilisateur peut ainsi tourner autour d'un véhicule disposé dans l'espace de lavage entraînant avec lui le tuyau (1).

Le support comporte un bras tournant (4) s'étendant selon une direction radiale à partir de l'axe de rotation (Z). Le bras tournant (4) supporte donc au moins en partie le tuyau (1) et balaie une surface sensiblement horizontale lors de sa rotation. L'utilisateur n'a donc pas à supporter la totalité du poids du tuyau (1) lorsqu'il procède au lavage et plus particulièrement lorsqu'il se déplace autour d'un véhicule dans l'espace de lavage.

Le bras tournant (4) comporte des moyens modulant sa longueur en fonction de sa position angulaire de balayage au-dessus de l'espace de lavage. Cette modulation de longueur permet ainsi d'optimiser le positionnement du tuyau (1) par rapport à un véhicule. Ce dernier présente en général ou dans la plupart des cas un contour d'allure rectangulaire autour duquel se déplace l'utilisateur en manipulant l'extrémité (3) du tuyau (1). Comme le bras tournant (4) supporte en partie le poids du tuyau (1) et que sa longueur varie en fonction de sa position de balayage, il est ainsi possible pour l'utilisateur de manipuler le tuyau (1) en disposant d'une longueur suffisante dudit tuyau (1) en se déplaçant selon la longueur et la largeur du véhicule. Le bras tournant (4) remplit donc sa fonction de support indépendamment du positionnement de l'utilisateur par rapport au véhicule. L'utilisateur n'a donc pas à manipuler une surcharge de masse de tuyau. En outre, le bras tournant (4) n'est pas soumis à des contraintes mécaniques accrues lorsque l'utilisateur se déplace selon la largeur ou la longueur du véhicule. La longueur modulable du bras tournant (4) ne génère donc pas une usure prématurée des éléments constitutifs du support du tuyau (1).

Des contraintes mécaniques accrues pourraient être générées, notamment lorsque le bras tournant (4) ne présente pas de longueur modulable et que l'utilisateur nécessite une longueur accrue du tuyau (1) pour avoir accès à certaines zones du véhicule à nettoyer. Il en résulte par conséquent une usure prématurée ou une fragilisation du bras tournant (4) ainsi que des articulations s'y rapportant dans les installation s de lavage de l'état de la technique.

Selon un exemple de réalisation, l'installation de lavage conforme à l'invention comporte un mât vertical (5) centré au-dessus de l'espace de lavage et à partir duquel s'étend le bras tournant (4). Le bras tournant (4) est relié mécaniquement au mât vertical (5) avec une extrémité axiale (6). Cette dernière comporte par exemple une articulation axiale d'axe vertical confondu avec l'axe vertical (Z). Le mât vertical (5) est avantageusement solidaire en rotation avec le bras tournant (4). Le mât vertical (5) est par exemple une pièce tubulaire constituant un conduit d'amenée du liquide de lavage et sur lequel est connectée la première extrémité (2) du tuyau (1). Ce dernier est par ailleurs relié de façon rigide à une extrémité extérieure (7) du bras tournant (4). L'extrémité extérieure (7) est distante radialement de l'axe de rotation vertical (Z).

La liaison rigide ou la fixation entre le bras tournant (4) et l'extrémité extérieure (7) est réalisée à l'aide de tout moyen connu.

L'installation de lavage conforme à l'invention comporte également des moyens de guidage fixes. Les moyens de guidage fixes supportent le bras tournant (4) lors de sa rotation autour de l'axe de rotation vertical (Z). Les moyens de guidage fixes permettent également de guider et d'accompagner le déplacement du bras tournant (4) ainsi que du tuyau (1) lorsque l'utilisateur l'entraîne à des fins de lavage autour ou dans l'espace de lavage.

Les moyens de guidage fixes s'étendent de préférence dans un plan d'extension sensiblement horizontal et constituent au moins en partie les moyens générant la modulation de longueur du bras tournant (4). C'est la position angulaire du bras tournant (4) autour de l'axe (Z) lors de son déplacement sur les moyens de guidage, qui détermine la longueur dudit bras tournant (4). Les moyens de guidage comportent par exemple une glissière (8). Cette dernière présente avantageusement une forme oblongue correspondant par exemple à une projection homothétique en périphérie sensiblement rectangulaire d'un véhicule.

Il est évident que la glissière (8) ne présente pas de partie angulaire de manière à permettre au bras tournant (4) d'être guidé et supporté de façon optimale.

Le bras tournant (4) comporte avantageusement un patin (9) s'appuyant et se déplaçant sur la glissière (8). Le patin (9) est avantageusement pourvu des butées latérales (10) s'étendant de part et d'autre de la glissière (8). Les butées latérales (10) empêchent ainsi le patin (9) et par conséquent le bras tournant (4) de s'écarter de la glissière (8), ce qui pourrait conduire à un blocage ou à une détérioration du bras tournant (4).

Selon un exemple de réalisation, le bras tournant (4) est un double parallélogramme déformable, présentant une articulation axiale centrée sur l'axe de rotation vertical (Z), une articulation médiane (8a) guidée en déplacement par les moyens du guidage fixes et une articulation extérieure (7a) associée à un organe de maintien ou de fixation du tuyau (1). Les articulations axiales et extérieures correspondent respectivement aux extrémités axiale (6) et extérieure (7) du bras tournant (4). L'articulation médiane est par exemple associée au patin (9) sur lequel sont centrées les montées rotatives des branches centrales (11) du double parallélogramme déformable. Les branches centrales (11) sont chacune reliées via des articulations verticales à des branches extrêmes (12, 13) réalisant respectivement les extrémités axiale (6) et extérieure (7) du bras tournant (4). Les branches centrales (11) sont reliées aux branches extrêmes (12, 13) par l'intermédiaire d'articulations secondaires (11 a) d'axes verticaux.

Selon un autre exemple de réalisation conforme à l'invention, le bras tournant (4) est un bras du type télescopique non représenté. Dans ce cas d'application, la glissière (8) peut ne plus être une représentation homothétique du contour d'un véhicule, mais refléter par sa géométrie directement le contour souhaité.

Avantageusement la seconde extrémité (3) du tuyau (1) est associée à un organe de manipulation du type lance de lavage, connu en tant que tel.

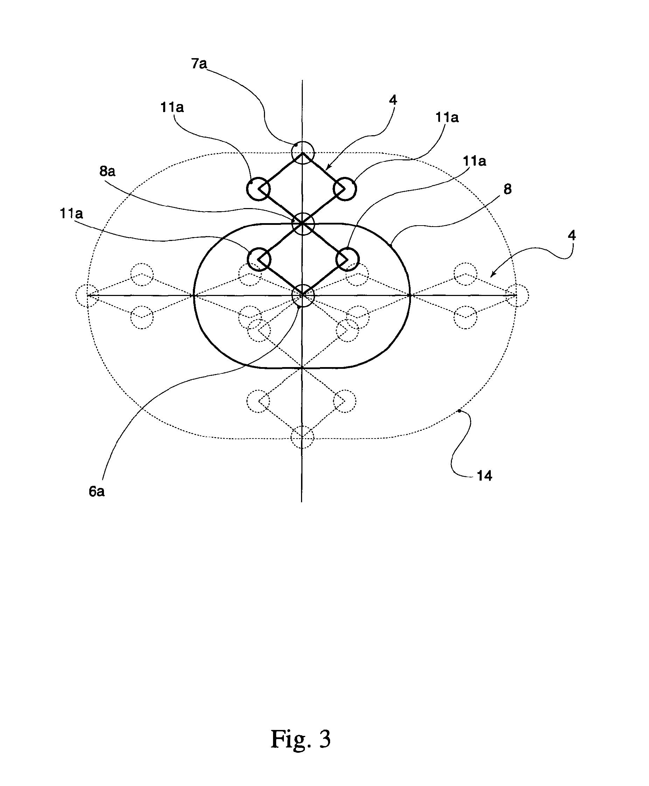

Dans la figure 3, on montre le bras tournant (4) dans une position représentée en très gras schématisant la longueur minimale du double parallélogramme déformable constituant ledit bras tournant (4). L'articulation médiane (8a) se déplace suivant la glissière (8) et l'articulation extérieure (7a) décrit une ligne pointillée oblongue (14) correspondant sensiblement à une représentation homothétique du contour d'un véhicule. Le bras tournant (4)est également représenté en pointillés dans des positions correspondant à des longueurs maximales du double parallélogramme déformable.

## Revendications

1. Installation de lavage comportant :
- des moyens d'alimentation à haute pression en liquide de lavage ;
- un tuyau (1) dont une première extrémité (2) est reliée au moyen d'alimentation, une seconde extrémité étant pourvue d'une buse de projection du liquide de lavage,
- un support soutenant le tuyau (1) et monté rotatif autour d'un axe de rotation (Z), sensiblement vertical, de manière à s'étendre au-dessus d'un espace de lavage,
- ledit support comportant un bras tournant (4) s'étendant selon une direction radiale à partir de l'axe de rotation (Z), ledit bras (4) supportant au moins en partie le tuyau (1) et balayant une surface sensiblement horizontale lors de sa rotation,
**caractérisée en ce que** le bras tournant (4) comporte des moyens modulant sa longueur, en fonction de sa position angulaire de balayage au-dessus de l'espace de lavage.

2. Installation de lavage selon la revendication 1, **caractérisée en ce qu'**elle comporte un mât (5) vertical, centré au-dessus de l'espace de lavage à partir duquel s'étend le bras tournant (4).

3. Installation de lavage selon la revendication 2, **caractérisée en ce que** le bras tournant (4) est relié mécaniquement au mât (5) vertical avec une extrémité axiale (6).

4. Installation de lavage selon la revendication 2 ou 3, **caractérisée en ce que** le mât (5) vertical est une pièce tubulaire constituant un conduit d'amenée du liquide de lavage et sur lequel est connectée la première extrémité (2) du tuyau (1).

5. Installation de lavage selon l'une quelconque des revendications 1 à 4,
**caractérisée en ce que** le tuyau (1) est relié de façon rigide à une extrémité extérieure (7) du bras tournant (4), distante de l'axe de rotation vertical (Z).

6. Installation de lavage selon l'une quelconque des revendications 1 à 5,
**caractérisée en ce qu'**elle comporte des moyens de guidage fixes, supportant le bras tournant (4) lors de sa rotation autour de l'axe de rotation vertical (Z).

7. Installation de lavage selon la revendication 6, **caractérisée en ce que** les moyens de guidage s'étendent dans un plan d'extension sensiblement horizontal et constituent au moins en partie les moyens modulant la longueur du bras tournant (4).

8. Installation de lavage selon la revendication 6 ou 7, **caractérisée en ce que** les moyens de guidage comportent une glissière (8) ou un rail.

9. Installation de lavage selon la revendication 8, **caractérisée en ce que** la glissière (8) s'étend selon un trajet de forme oblongue, correspondant à une projection homothétique d'une périphérie sensiblement rectangulaire d'un véhicule.

10. Installation de lavage selon l'une quelconque des revendications 8 ou 9,
**caractérisée en ce que** le bras tournant (4) comporte un patin (9) s'appuyant et se déplaçant sur la glissière (8).

11. Installation de lavage selon l'une quelconque des revendications 8 ou 9,
**caractérisée en ce que** le bras tournant (4) comporte un organe de roulement s'appuyant et se déplaçant sur la glissière (8).

12. Installation de lavage selon l'une quelconque des revendications 6 à 11,
**caractérisée en ce que** le bras tournant (4) est un double parallélogramme déformable, présentant une articulation axiale voisine ou centrée sur l'axe de rotation vertical (Z), une articulation médiane guidée en déplacement par les moyens de guidage fixes et une articulation extérieure associée à un organe de maintien ou de fixation du tuyau (1).

13. Installation de lavage selon l'une quelconque des revendications 1 à 11,
**caractérisée en ce que** le bras tournant (4) est un bras du type télescopique.

14. Installation selon l'une quelconque des revendications 1 à 13, **caractérisée en ce que** la seconde extrémité (3) du tuyau (1) est associée à un organe de manipulation facilitant la préhension dudit tuyau (1) par l'utilisateur.
